(19)

Europäisches
Patentamt
European
Patent Office
Office européen
des brevets

(11) **EP 2 485 866 B1**

(12) **EUROPEAN PATENT SPECIFICATION**

(45) Date of publication and mention
of the grant of the patent:
**11.09.2013 Bulletin 2013/37**

(51) Int Cl.:
***B23Q 1/38*** *(2006.01)*      ***B23Q 11/00*** *(2006.01)*
***F16F 15/32*** *(2006.01)*      ***G01M 1/32*** *(2006.01)*

(21) Application number: **10763182.2**

(22) Date of filing: **05.10.2010**

(86) International application number:
**PCT/EP2010/064850**

(87) International publication number:
**WO 2011/042446 (14.04.2011 Gazette 2011/15)**

(54) **WORKPIECE HOLDER OF A MACHINE TOOL WITH MEANS FOR ESTIMATING THE ECCENTRICITY OF THE WORKPIECE**

WERKSTÜCKHALTER FÜR EINE WERKZEUGMASCHINE MIT MITTELN ZUM MESSEN DER EXZENTRIZITÄT DES WERKSTÜCKS.

PORTE-PIÈCE POUR MACHINE-OUTIL AVEC DES MOYENS POUR ESTIMER L'ECCENTRICITÉ DE LA PIÈCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2009 IT PD20090290**

(43) Date of publication of application:
**15.08.2012 Bulletin 2012/33**

(73) Proprietor: **Hpt Sinergy S.r.l.**
**35131 Padova (IT)**

(72) Inventor: **GUELI, Francesco**
**I-35030 Selvazzano Dentro (IT)**

(74) Representative: **Modiano, Micaela Nadia et al**
**Modiano & Partners (IT)**
**Via Meravigli, 16**
**20123 Milano (IT)**

(56) References cited:
**EP-A1- 2 067 569      GB-A- 2 160 451**
**US-A- 3 776 065**

## Description

## Technical field

The present invention relates to a part holder, particularly for parts having a large mass to be machined in machine tools such as vertical lathes and the like.

## Background Art

Nowadays, in the field of machine tools for machining parts having a large mass, for example even over 100 tonnes, vertical lathes provided with a part holder are known which comprise rotating tables, provided with supporting fifth wheels with rolling bearings, i.e. roller bearings or ball race bearings, or hydrostatic bearings.

In order to be able to effectively carry out machining operations with such machines it is necessary for the part to be balanced on the worktable, i.e. it is necessary for the centre of gravity axis of the loads supported by the worktable to coincide with the axis of rotation of the worktable.

Indeed, an eccentricity in the centre of gravity of the loads arranged on the worktable, with respect to the axis of rotation of the worktable, gives rise to centrifugal stresses of intensity that is proportional to the mass of such loads and to the speed of rotation of the worktable.

If there is eccentricity of the load on the worktable, therefore, the high mass of the parts supported in rotation by the worktable induces stresses on the radial guide bearings of the worktable which are such as to seriously damage them within a short period of operation of the machine.

Therefore, in the sector in which such machine tools are used, there is a pressing requirement for balancing the part on the worktable, before starting up the machine tool for machining the part.

However, nowadays balancing machines are not known which make it possible to balance parts which have a mass of a few dozens of tonnes, as well as over 100 tonnes.

Therefore, at present the technicians whose job is to prepare the machine for machining carry out a balancing of the part, basing their conclusions on intuition and on experience.

In practice, the technicians arrange counterweights on the worktable or associated with the piece that it is supporting, as a function of the dynamic behaviour of the part holder, which is detectable when the worktable is made to rotate.

However, this method is very empirical in nature, and the balancing which is obtained with it is susceptible to errors of estimation which depend on the experience and intuition of the technician who carries out the balancing operation.

EP 2 607 569 A1 discloses a hydrostatic rotary table for a machine tool, comprising a fixed lower supporting fifth wheel provided with a plurality of circumferentially arranged hydrostatic pockets fed with pressurised fluid so as to support in a fluid suspension manner, by means of a supporting film, a rotating upper fifth wheel provided with a work plane on which to position a load element to be machined. A pressurized fluid feeding system, comprising a plurality of feeding units connected to the hydrostatic pockets, provides each hydrostatic pocket with pressurized fluid at a respective feeding pressure that is adjustable so as to maintain a substantially constant thickness of supporting film formed by the circumferentially arranged hydrostatic pockets interposed between the upper and lower fifth wheels, so as to eliminate or significantly reduce tilting phenomena of the rotary table in the event of decentered or eccentric loads. The values of each adjustable feeding pressure is modulated according to a substantially sinusoidal law which is a function of the angular position of a decentered load with respect to a reference axis of the table. The angular position of the decentered element is set as a function of an initial imbalance position of the element that is determined by at least three angularly spaced pressure sensors connected to respective angularly spaced hydrostatic pockets, and of a subsequent rotation angle of the table with respect to the reference axis that is measured by a further sensor means.

GB 2 160 451 A discloses a rotary table unit used in the field of ultra precision machining of workpieces such as microminiature components. The rotary table unit comprises a stationary base element, and a rotatable table element with a central shaft fixed thereto that is rotatably mounted on the base element by means of bearings interposed between the shaft and a cilindrical bore of the stationary base element. Circumferentially spaced apart static pressure pads of a peripheral guide portion of the base element are fed with pressurized fluid which fills a circular clearance between the guide portion and a lower wall of an annular groove of the rotatable table element, thereby functioning as a hydrostatic bearing guide for axially supporting the rotating table element on the base element. A similar hydrostatic bearing guide is also provided in the central portion of the table element for radially supporting the table element, by means of circumferentially spaced apart static pressure pads formed on a cylindrical guide of the base element and fed with pressurized fluid which fills an annular clearance between the cylindrical guide and a vertical recess of the table element. A main drive motor drives a peripherial rim of the rotating table element, and an auxiliary drive motor provides supplemental drive force to the main drive motor as a function of a detection signal from a current detection circuit that detects a change in the electic current of the main drive motor thereby detecting a change in any load applied to the table element. The main drive motor may be a hydaulic motor in which case the current detection circuit is replaced with a hydraulic pressure detection circuit.

US 3 776 065 A discloses an automatic balancing apparatus for automatically balancing a rotating body which is mounted upon a machine tool (grinding machine) when the rotating body (grinding wheel) is rotated in an unbalanced condition. A spindle mounted in a bearing sleeve is provided with a vibration detector for detecting the vibration of the spindle due to an unbalanced condition of the grinding wheel, the vibration detector being composed of circumferential fluid bearing pockets arranged between the spindel and the sleeve and mutually connected through 90° circumferential restricted passages, and amplifier valves including throttle valves and spool valves in pressurized fluid communication with the fluid bearing pockets. A primary operating shaft, axially moveably recieved in a bore of spindle, is connected at one end to a driving device and at another end to a secondary operating shaft having first and second annular disc-shaped balancing pieces connected via slide slots thereof with respective driving rollers. The driving device comprises a rotating cylinder and a reciprocating cylinder provided with respective piston operated pressure chambers, in fluid communication with the spool valves of the amplifier valves via solenoid valves, for rotating the primary operating shaft and for axially moving the primary operating shaft and the secondary shaft connected thereto by means of pressure fluctuation detected by the vibration detector, causing radial movement of the balancing pieces and automatic compensation for the unbalanced condition of the grinding wheel or the eccentric location of the center of gravity of the spindle.

## Disclosure of the Invention

The aim of the present invention is to devise a part holder that makes it possible to precisely and effectively balance the load being supported by the worktable for the machining of the part arranged upon it.

Within this aim, an object of the invention is to provide a part holder that makes it possible to identify, and indicate to the operator, the position of the centre of gravity axis of the load supported by the worktable with respect to the axis of rotation of the worktable.

Another object of the invention is to devise a part holder that makes it possible to identify, and indicate to the operator, the height on the worktable of the centre of gravity of the load that is being supported by it.

Another object of the invention is to provide a part holder that makes it possible to identify, and indicate to the operator, the position of the centre of gravity axis and/or of the height of the centre of gravity of the load supported by the worktable, in a reliable and efficient manner.

Another object of the invention is to devise a part holder that is structurally simple and easy to use.

In accordance with the invention, there is provided a part holder, particularly for parts having a large mass to be machined with machine tools such as vertical lathes and the like, as defined in the appended claims.

## Brief description of the drawings

Further characteristics and advantages of the invention will become better apparent from the following detailed description of a preferred, but not exclusive, embodiment of the part holder according to the invention, illustrated by way of non-limiting example in the accompanying drawings, wherein:

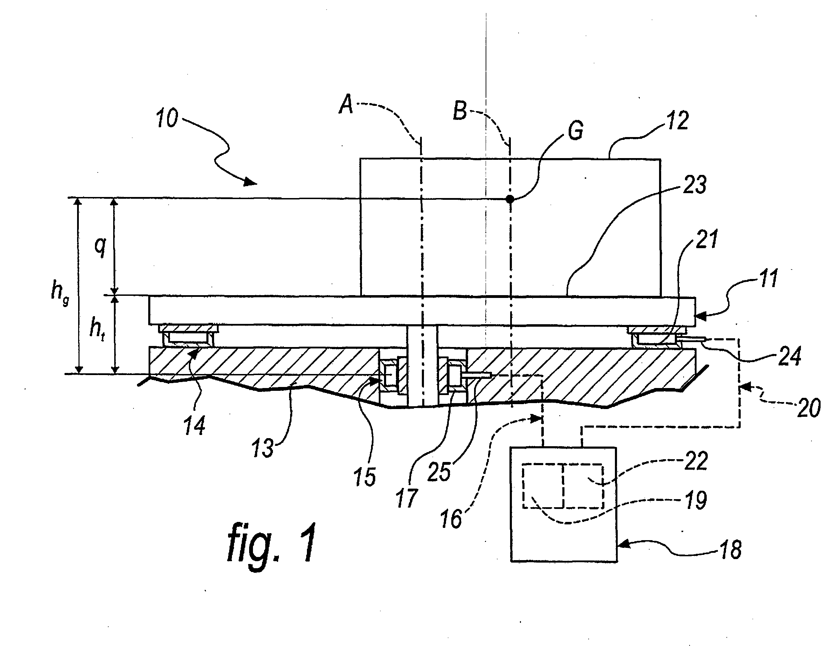

Figure 1 shows a simplified diagram of a part holder, according to the invention;

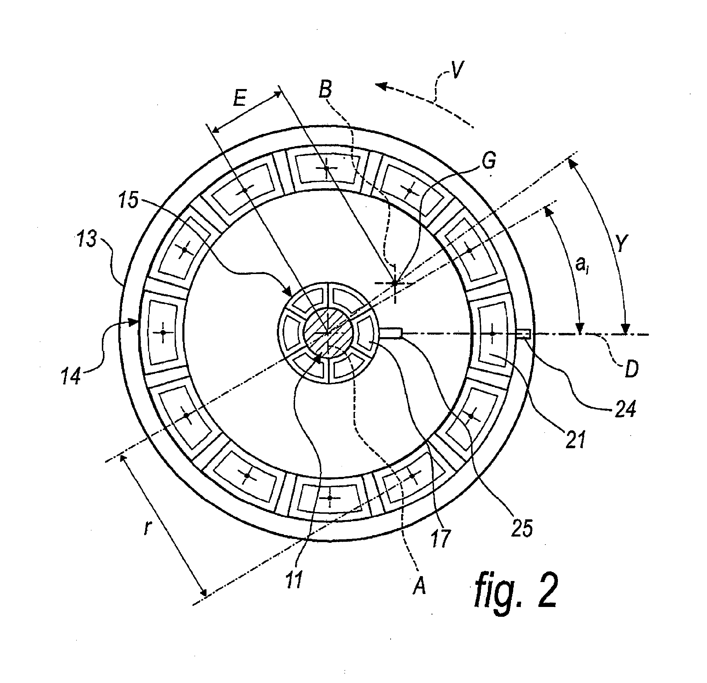

Figure 2 shows a simplified diagram of a part holder, according to the invention, without the worktable and seen in a plan view from above;

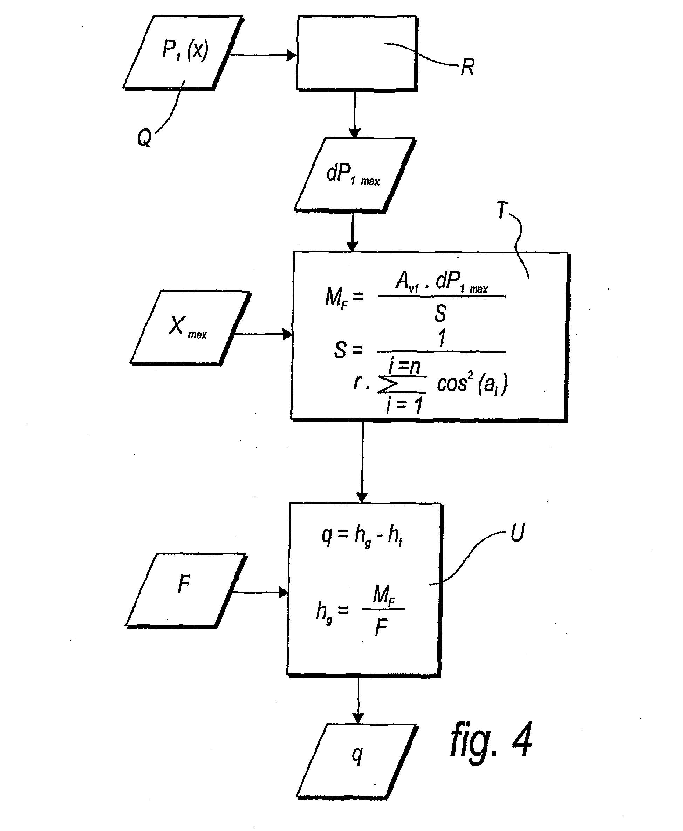

Figures 3 and 4 show two flowcharts of the functioning of a part holder, according to the invention;
Figure 5 shows a simplified diagram of a part holder, according to the invention, in a plan view seen from above;
Figure 6 shows a chart of the trend of one of the parameters as a function of the rotation angle of the worktable on the footing of a part holder, according to the invention, in non-balanced load conditions.

## Ways of carrying out the Invention

It should be noted that everything found to be already known during the patenting procedure is not intended to be claimed and is intended to be removed from the claims.

With reference to the figures, the reference numeral 10 generally designates a part holder, particularly for parts having a large mass to be machined in machine tools such as vertical lathes and the like, which comprises

- a worktable 11 for supporting the part 12 to be machined,
- a footing 13 for supporting the worktable 11,
- an axial bearing 14 which is adapted to support the worktable 11 on the footing 13,
- a radial bearing 15, provided with hydrostatic radial sliders, which is adapted for the guided coupling of the worktable 11 with the footing 13 so as to allow rotation about a rotation axis A of the worktable 11 on the footing 13, the rotation axis A being formed by the axis of the radial bearing 15,
- first sensing means 16, which are functionally connected to a chosen radial slider 17 of the radial bearing 15 and are adapted to detect a functional parameter, such functional parameter being a parameter which indicates the operation of the chosen radial slider 17, such as for example the operating pressure or the gap height,
- a central processing unit 18, which is functionally connected to the sensing means 16 in order to receive from them estimates of the functional parameter.

The central processing unit 18 comprises means 19 for estimating the eccentricity E of the centre of gravity axis B, of a part 12 arranged on the worktable 11, with respect to the rotation axis A, the estimation means 19 being adapted to process the values of such functional parameter detected by the sensing means 16, so as to obtain the value of the eccentricity E, to be indicated to the operator.

In a substantially equivalent manner, other embodiments of a part holder, according to the invention, can comprise more than one axial bearing and/or more than one radial bearing.

Advantageously, the axial bearing 14 comprises axial sliders with hydrostatic support.

Moreover, the part holder 10 advisably comprises second sensing means 20, which are functionally connected to a chosen radial slider 21 of the radial bearing 14, in order to detect a functional parameter thereof, which is a parameter that indicates its operation, such as for example the operating pressure or the gap height.

The central processing unit 18 conveniently is functionally connected to the second sensing means 20 in order to receive from them estimates of such functional parameter.

Moreover, preferably, the central processing unit 18 also comprises means 22 for estimating the height q, on the worktable 11, of the centre of gravity G of a part 12 which is arranged on the resting surface 23 of the worktable 11.

The estimation means 22 are advisably adapted to process the values of the functional and operating parameters that are detected by the sensing means 16 and 20, so as to obtain the value of the height q.

In alternative embodiments of the invention, the second sensing means can be connected to more than one chosen axial slider, in order to detect possibly more than one operating parameter thereof, as well as the first sensing means can be connected to more than one chosen radial slider, in order to detect possibly more than one functional parameter thereof.

In substantially equivalent embodiments of the part holder, according to the invention, not shown in the accompanying drawings, such axial bearings and/or such radial bearings conveniently comprise

- a bearing with rolling elements, such as balls or rollers, and
- hydrostatic sliders, which are interposed between such bearing with rolling elements and at least one of the components of the part holder, chosen between the worktable and the footing, which the bearing with rolling elements rotatably couples to the other.

In such embodiments, such hydrostatic sliders are substantially static with respect to the elements between which they are interposed, since they are interposed between a race of the bearing with rolling elements and the component of the part holder which remains substantially integral with such race.

Preferably, the second sensing means 20 comprise a first pressure transducer 24, which is connected to the chosen axial slider 21, in order to detect an axial flow pressure $P_1$, this being the operating pressure of the chosen axial slider 21, such operating parameter being the axial flow pressure $P_1$.

Moreover, conveniently, the first sensing means 16 also comprise at least a second pressure transducer 25, which is connected to the chosen axial slider 17, in order to detect a radial flow pressure $P_2$, this being the operating pressure of the chosen axial slider 17, and such operating parameter thus being the radial flow pressure $P_2$.

Moreover, the central processing unit 18 advantageously comprises load calculation means, which are adapted to calculate the value of the load m that bears on the worktable 11, the value of the load m being equal to the product obtained by multiplying a value of a stationary axial pressure variation dPo multiplied by a first virtual area $A_{v1}$ multiplied by the number of sliders $n_1$ of the axial bearing 21, i.e. in formula $m=dP_0 \cdot A_{v1} \cdot n_1$, where the first virtual area $A_{v1}$ is the virtual area of the chosen axial slider 21 and the stationary axial pressure variation dPo is equal to the pressure variation detected by the first pressure transducer 24 between a condition in which the worktable 11 is stationary and not loaded and a condition in which the worktable 11 is stationary and loaded with such load, i.e. with the part 12 and any other masses of auxiliary bodies.

Preferably, the estimation means 19 comprise

- recording means, which are adapted to perform an operation C for recording values of a rotation angle x, of the value of the load m and of values of the radial flow pressure $P_2$ as a function of the rotation angle x, which is the rotation angle of the worktable 11 around the axis of rotation A with respect to a predefined reference D,
- first calculation means, which are adapted to perform a first operation H for calculating the value of a maximum radial flow pressure variation $dP_{2max}$ and of a maximum pressure angle $x_{max}$, the maximum radial flow pressure variation value $dP_{2max}$ being equal to the maximum value assumed by the variation of the radial flow pressure $P_2$ detected by the second pressure transducer 25 in an interval of values of the rotation angle x that covers 360° and which thus corresponds to a complete rotation of the worktable 11 performed at a chosen constant angular velocity v, and the maximum pressure angle $x_{max}$ being the value assumed by the rotation angle x for which the radial flow pressure variation $dP_2$ is equal to the maximum radial flow pressure variation $dP_{2max}$,
- second calculation means, which are adapted to perform a second operation L for calculating a value of an angle of the load y and a value of the force of the load F, the load angle y being equal to the difference obtained by subtracting from 360° the value of the maximum pressure angle $a_{max}$ expressed in degrees, i.e. in formula $y° = 360° - a_{max}°$, the load force value F being further equal to the product of the multiplication of half of the number of sliders $n_2$ of the radial bearing 15 multiplied by a second virtual area $A_{v2}$ multiplied by the maximum radial flow pressure variation $dP_{2max}$, i.e. in formula $F = (n_2/2) \cdot A_{v2} \cdot dP_{2max}$, where the second virtual area $A_{v2}$ is the virtual area of the chosen radial slider 17,

- third calculation means, which are adapted to perform a third operation N for calculating the value of eccentricity E, which is equal to the ratio that is the result of the division of the force of the load F divided by the product of such value of the load m multiplied by the square of the value of such chosen angular velocity v, in formula $E = F/(m \cdot v^2)$.

It is noted that the validity of the formula for calculating the load force F, i.e. $F = (n_2/2) \cdot A_{v2} \cdot dP_{2max}$, is easily found and confirmed in the current state of the art.

Indeed, it is sufficient to carry out a test which is adapted to detect the pressure on each radial slider during the constant- speed rotation of a worktable which is supporting a load with a centre of gravity axis that is eccentric with respect to the axis of rotation of the worktable, in order to find that the centrifugal force due to this eccentricity, which is detected as the composition of the stresses that are cooperatively supported by the radial sliders, can effectively be approximated with such calculation formula.

Conveniently, the recording means are further adapted to perform an auxiliary recording operation Q of values of the axial flow pressure $P_1$ as a function of the rotation angle x.

Moreover, the estimation means 22 advantageously comprise

- fourth calculation means, which are adapted to perform a fourth operation R for calculating a value of maximum axial flow pressure variation $dP_{1max}$ equal to the maximum value assumed by the variation of the axial flow pressure $P_1$ detected by the first pressure transducer 24 in a range of values of the rotation angle x which covers 360°, i.e. corresponding to a complete rotation of the worktable 11 performed at the chosen constant angular velocity v,

- fifth calculation means, which are adapted to perform a fifth operation T for calculating a value of tipping moment $M_F$ equal to the product that is the result of the multiplication of the first virtual area $A_{v1}$ multiplied by such maximum axial flow pressure variation $dP_{1max}$ divided by a distribution coefficient s, in formula $M_F = A_{v1} \cdot dP_{1max}/s$, the distribution coefficient s being equal to the reciprocal of the product obtained from the multiplication of the radius of the sliders r multiplied by the sum obtained by adding the squares of the cosines of the angles of the centres of the sliders $a_i$, estimated with respect to a reference radius, in formula

$$s = \frac{1}{\left(r \cdot \sum_{i=1}^{i=n} (\cos^2 a_i)\right)} ,$$

- sixth calculation means, which are adapted to perform a sixth operation U for calculating the height q equal to the difference between a height of the centre of gravity $h_g$ and a height of the worktable $h_t$, in formula $q = h_g - h_t$, the height of the centre of gravity $h_g$ being equal to the ratio obtained from the division of the value of the tipping moment $M_F$ divided by the force of the load F, in formula $hg = M_F/F$, and such height of the worktable $h_t$ being equal to the distance between the centre of the radial bearing 15 and the resting surface 23 of the worktable 11. ,

It is noted that the distribution coefficient s is an estimate of the distribution of the eccentric stress with respect to the axis of rotation of the worktable that is supported during the operation by the sliders of a hydrostatic bearing.

The validity of the expression of the distribution coefficient s offered here, i.e.

$$s = \frac{1}{\left(r \cdot \sum_{i=1}^{i=n} (\cos^2 a_i)\right)}$$

is easily found and confirmed in the current state of the art.

Indeed, it is sufficient to carry out a test which is adapted to detect the pressure on each axial slider during the constant- speed rotation of the worktable which is supporting a load with a centre of gravity axis that is eccentric with respect to the axis of rotation of the worktable, in order to find that the distribution of the stresses that are supported by the axial sliders can be reasonably approximated to that calculated with this expression.

Advantageously, the central processing unit 18 is an electronic computer, such as for example a PLC (which is the acronym of the English expression "programmable logic controller") , which integrates the recording means and the calculation means.

Moreover, the central processing unit 18 comprises means for interfacing with the operator, which are not shown in the enclosed drawings and which can for example be implemented with a monitor connected to the PLC, which are adapted to display

- the value of the maximum pressure angle $x_{max}$, with respect to the reference D,
- the value of the eccentricity E, and
- the value of the height q.

With these indications the operator is able to estimate the mass and position of the counterweight or counterweights in order to obtain an exact and safe balancing of the part holder 10.

Advantageously, the central processing unit 18 further comprises seventh calculation means, for calculating a counterweight mass and a position of such counterweight mass on the worktable 11, for the balancing of the part 12 on the worktable 11, the term balancing here meaning that condition corresponding to a configuration in which the eccentricity E, estimated as described above, has a nil value.

The operation of a part holder 10, according to the invention, is as follows.

A part 12 to be machined is arranged on the worktable 11 in a chosen position for machining, and is locked in place by the provided claws, which are not shown in the accompanying figures.

The piece is now ready for the balancing operation.

With the worktable stationary, such load calculation means estimate the value of the load m that bears on the worktable 11, which is given by $m=dP_0 \cdot A_{v1} \cdot n_1)$, according to the foregoing description.

In this way the part holder 10 is also an instrument for the weighing of the parts arranged on its worktable 11.

In order to assess the eccentricity E (if any) of the centre of gravity axis B of the load with respect to the axis of rotation A, the worktable 11 is made to rotate at the chosen angular velocity v.

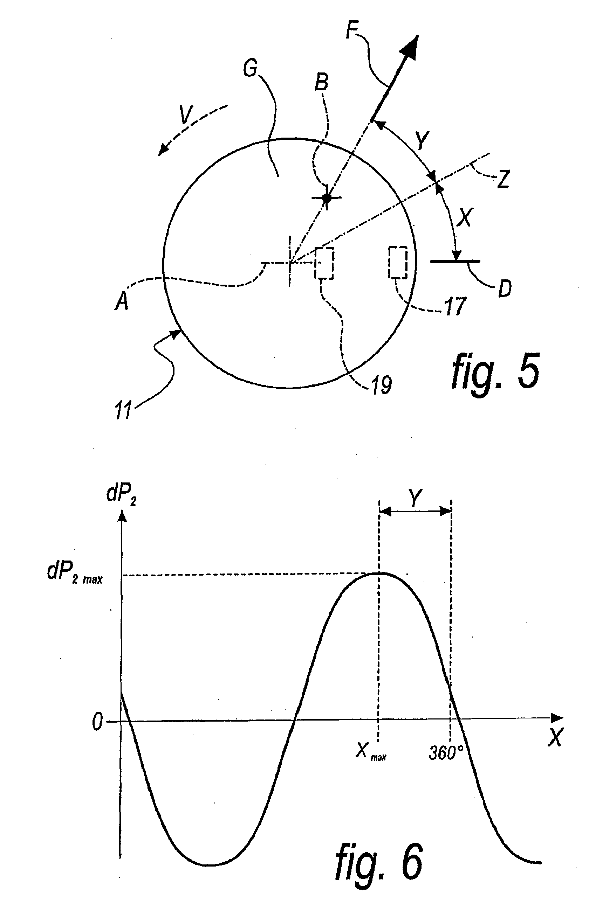

For the purposes of non-limiting example, with reference to Figure 5, therein the letter Z indicates a reference radius which is integral with the worktable 11.

The angle of rotation x is assumed, which is equal to the angle comprised between the reference radius Z and the reference D which is integral with the footing 13.

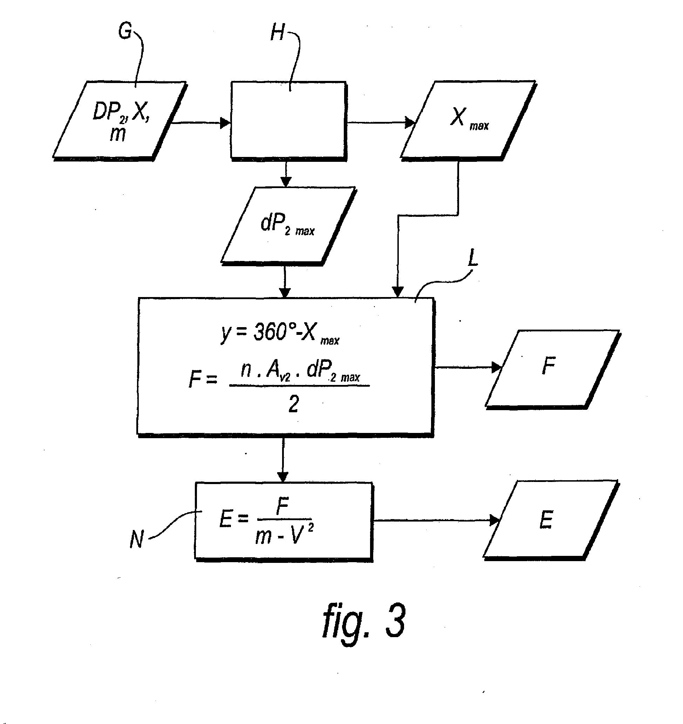

With particular reference to Figure 3, the estimation means 19, on the basis of the readings of the second pressure transducer 25, perform the estimate of the eccentricity E by means of

- the first calculation means, which perform a first calculation operation H, of the value of the maximum radial flow pressure variation $dP_{2max}$ and of the maximum pressure angle $x_{max}$,
- the second calculation means, which perform a second calculation operation L, of the value of an angle of the load $y°=360°- x_{max}°$, and of a value of the force of the load $F= (n_2/2) \cdot A_{v2} \cdot dP_{2max}$, and
- the third calculation means, which perform a third calculation operation N, of the value of eccentricity

$$E=F/(m \cdot v^2).$$

In this way, the operator has an indication that the centre of gravity axis B can be identified on the worktable 11

- at a distance which is equal to the eccentricity E of the axis of rotation A, and
- in an angular position, with respect to the reference radius Z, that is equal to the angle of the load y, measured in the direction of the chosen angular velocity v.

At this point the operator can carry out a first balancing by means of the positioning of counterweights on the worktable 11.

In order to also implement a balancing which is aimed at cancelling out the tipping moment of the load in the working configuration, the estimation means 22, by means of processing the operating parameter detected by the first pressure transducer 24, estimate the height q of the centre of gravity G on the resting surface 23.

More specifically, the estimation means 22 perform the estimation of the height q by means of

- the fourth calculation means, which perform a fourth calculation operation R, of the value of the maximum axial flow pressure variation $dP_{1max}$,
- the fifth calculation means, which perform a fifth calculation operation T, of the value of the tipping moment $M_F=A_{v1} \cdot dP_{1max}/s$,
- the sixth calculation means, which perform a sixth calculation operation U, of the height $q=h_g-h_t$.

Advisably, then such seventh calculation means calculate, for the operator, the value of a counterweight mass and its position on the worktable 11, for the balancing of the part 12 on the worktable 11.

In practice it has been found that the invention fully achieves the intended aim and objects by devising a part holder that makes it possible to precisely and effectively balance the load being supported by the worktable for the machining of the part arranged upon it.

Moreover, a part holder according to the invention makes it possible to identify, and indicate to the operator, the position of the centre of gravity axis of the load supported by the worktable with respect to the axis of rotation of the worktable, and thus promptly indicate anomalous load conditions to the operator.

A part holder according to the invention also makes it possible to identify and indicate, to the operator, the height on the worktable of the centre of gravity of the load that it is supporting, so that the tipping moment that the part may experience during the machining, if there is any eccentricity of its centre of gravity axis with respect to the axis of rotation, may be balanced in a straightforward manner.

Also, a part holder according to the invention makes it possible to identify, and indicate to the operator, the position of the centre of gravity axis and/or of the height of the centre of gravity of the load supported by the worktable, in a reliable and efficient manner, using the estimate of the pressure of the sliders of the hydrostatic bearings.

**Claims**

1. A part holder (10) particularly for parts having a large mass to be machined in machine tools such as vertical lathes and the like, comprising

    - a worktable (11) for supporting a part (12) to be machined,
    - a footing (13) for supporting said worktable (11),
    - at least one axial bearing (14), which is adapted to support said worktable (11) on said footing (13); and
    - a central processing unit (18) comprising means (19) for estimating the eccentricity of the centre of gravity axis (B) of a part (12) arranged on said worktable (11) with respect to a rotation axis (A) of said worktable (11),

    the part holder (10) being **characterized in that** it further comprises
    - at least one radial bearing (15), provided with hydrostatic radial sliders, which is adapted for the guided coupling of said worktable (11) with said footing (13) so as to allow rotation about said rotation axis (A) of said worktable (11) on said footing (13), said rotation axis (A) being formed by the axis of said radial bearing (15), and
    - first sensing means (16), which are functionally connected to at least one chosen radial slider (17) of said at least one radial bearing (15) and are adapted to detect at least one functional parameter, said at least one functional parameter being a parameter that indicates the operation of said at least one chosen radial slider (17),
    - said central processing unit (18) being functionally connected to said first sensing means (16) in order to receive from them estimates of said functional parameter, and said estimation means (19) being adapted to process the values of said functional parameter detected by said sensing means (16), so as to obtain the value of said eccentricity (E).

2. The part holder according to claim 1, **characterized in that** said axial bearing (14) comprises axial sliders with hydrostatic support, said part holder (10) further comprising second sensing means (20), which are functionally connected to at least one chosen axial slider (21) of said axial bearing (14) and are adapted to detect at least one operating parameter, said at least one operating parameter being a parameter that indicates the operation of said at least one chosen axial slider (21), said central processing unit (18) being further functionally connected to second sensing means (20) in order to receive from them estimates of said operating parameter, said central processing unit (18) further comprising means (22) for assessing the height (q), on said worktable (11), of the centre of gravity (G) of a part (12) arranged on the resting surface (23) of said worktable (11), said assessment means (22) being adapted to process said values of said parameters detected by said first and second sensing means (16, 20), so as to obtain the value of said height (q).

3. The part holder according to claim 2, **characterized in that** said second sensing means (20) comprise at least one first pressure transducer (24), which is connected to said at least one chosen axial slider (21), in order to detect an axial flow pressure ($P_1$), which is the operating pressure of said at least one chosen axial slider (21), said at least one operating parameter comprising said axial flow pressure ($P_1$).

4. The part holder according to claim 3, **characterized in that** said first sensing means (16) comprise at least one second pressure transducer (25), which is connected to said at least one chosen radial slider (17) in order to detect a radial flow pressure ($P_2$), which is the operating pressure of said at least one chosen radial slider (17), said at least one functional parameter comprising said radial flow pressure ($P_2$).

5. The part holder according to claim 4, **characterized in that** said central processing unit (18) comprises load calculation means, which are adapted to calculate the value of the load (m) that bears on said worktable (11), said value of the load (m) being equal to the product obtained by multiplying a value of a stationary axial pressure variation ($dP_0$) multiplied by a first virtual area ($A_{v1}$) multiplied by the number of sliders of said axial bearing (14), in formulas $m=dP_0 \cdot A_{v1} \cdot n_1$, said stationary axial pressure variation ($dP_0$) being equal to the pressure variation detected by said first pressure transducer (24) between a condition in which said worktable (11) is stationary and not loaded and a condition in which said worktable (11) is stationary and loaded with said load, and said first virtual area ($A_{v1}$) being the virtual area of said chosen axial slider (21).

6. The part holder according to claim 5, **characterized in that** said estimation means (19) comprise

    - recording means, which are adapted to perform an operation for recording (C) values of a rotation angle (a), of said value of the load (m) and of values of said radial flow pressure ($P_2$) as a function of said rotation angle (a), said rotation angle (a) being the rotation angle of said worktable (11) around said axis of rotation (A) with respect to a predefined reference (D),

- first calculation means, which are adapted to perform a first operation (H) for calculating a maximum radial flow pressure variation ($dP_{2max}$) and a maximum pressure angle ($x_{max}$), said maximum radial flow pressure variation value ($dP_{2max}$) being equal to the maximum value assumed by the variation of said radial flow pressure ($P_2$) detected by said second pressure transducer (25) in an interval of values of said rotation angle (x) that covers 360° and corresponds to a rotation of said worktable (11) performed at a chosen constant angular velocity (v), and said maximum pressure angle ($x_{max}$) being the value assumed by said rotation angle (x) for which said radial flow pressure variation ($dP_2$) is equal to said maximum radial flow pressure variation ($dP_{2max}$),

- second calculation means, which are adapted to perform a second operation (L) for calculating a value of an angle of the load (y) and a value of the force of the load (F), said load angle (y) being equal to the difference obtained by subtracting from 360° the value of said maximum pressure angle ($x_{max}$) expressed in degrees, in formula $y°=360°-X_{max}°$, said load force value (F) being further equal to the product of the multiplication of half of the number of sliders ($n_2$) of said radial bearing (15) multiplied by a second virtual area ($A_{v2}$) multiplied by said maximum radial flow pressure variation ($dP_{2max}$), in formula $F=(n_2/2)\cdot A_{v2}\cdot dP_{2max}$, said second virtual area ($A_{v2}$) being the virtual area of said chosen radial slider (17),

- third calculation means, which are adapted to perform a third operation for calculating said value of eccentricity (E) equal to the ratio that is the result of the division of said force of the load (F) divided by the product of said value of the load (m) multiplied by the square of the value of said chosen angular velocity (v), in formula $E=F/(m\cdot v^2)$.

**7.** The part holder according to claim 6, **characterized in that** said recording means are further adapted to perform an auxiliary recording operation (Q) of values of said axial flow pressure ($P_1$) as a function of said rotation angle (x), said assessment means (22) comprising

- fourth calculation means, which are adapted to perform a fourth operation (R) for calculating a value of maximum axial flow pressure variation ($dP_{1max}$) equal to the maximum value assumed by the variation of said axial flow pressure ($P_1$) detected by said first pressure transducer (24) in a range of values of said rotation angle (x) which covers 360° and corresponds to a rotation of said worktable (11) performed at said chosen constant angular velocity (v),

- fifth calculation means, which are adapted to perform a fifth operation (T) for calculating a value of tipping moment ($M_F$) equal to the product that is the result of the multiplication of said first virtual area ($A_{v1}$) multiplied by said maximum axial flow pressure variation ($dP_{1max}$) divided by a distribution coefficient (s), in formula $M_F=A_{v1}\cdot dP_{1max}/s$, said distribution coefficient (s) being equal to the reciprocal of the product obtained from the multiplication of the radius of the sliders (r) multiplied by the sum obtained by adding the squares of the cosines of the angles of the centres of the sliders ($a_i$), estimated with respect to a reference radius, in formula

$$s = \frac{1}{\left(r \cdot \sum_{i=1}^{i=n} \left(\cos^2 a_i\right)\right)},$$

- sixth calculation means, which are adapted to perform a sixth operation (U) for calculating said height (q) equal to the difference between a height of the centre of gravity ($h_g$) and a height of the worktable ($h_t$), in formula $q=h_g-h_t$, said height of the centre of gravity ($h_g$) being equal to the ratio obtained from the division of said value of the tipping moment ($M_F$) divided by said force of the load (F), in formula $h_g=M_F/F$, and said height of the worktable ($h_t$) being equal to the distance between the centre of said radial bearing (15) and said resting surface (23) of said worktable (11).

**8.** The part holder according to claim 7, **characterized in that** said recording means and said calculation means are integrated in an electronic computer.

**9.** The part holder according to claim 8, **characterized in that** said central processing unit (18) comprises means for interfacing with the operator, which are adapted to have at least

- the value of said maximum pressure angle ($x_{max}$) with respect to said reference (D),
- the value of said eccentricity (E), and
- the value of said height (q).

**10.** The part holder according to claim 9, **characterized in that** said central processing unit (18) comprises seventh means for calculating a counterweight mass and a position of said counterweight mass on said worktable (11), for the balancing of the part (12) on said worktable (11), said balancing corresponding to a configuration in which said eccentricity (E) has a nil value.

11. The part holder according to one of the preceding claims, **characterized in that** at least one selectively between said at least one axial bearing and said at least one radial bearing comprises

- a bearing with rolling elements, and
- hydrostatic sliders, which are interposed between said bearing with rolling elements and at least one component of said part holder chosen between said worktable and said footing.

**Patentansprüche**

1. Ein Teilehalter (10) speziell für Teile mit großer Masse, die in Werkzeugmaschinen, wie zum Beispiel Vertikaldrehbänken und dergleichen, zu bearbeiten sind, Folgendes umfassend:

- einen Werktisch (11) zum Tragen eines zu bearbeitenden Teils (12),
- einen Fuß (13) zum Tragen des Werktischs (11),
- mindestens ein axiales Lager (14), das ausgebildet ist, um den Werktisch (11) auf dem Fuß (13) zu tragen, und
- eine zentrale Verarbeitungseinheit (18), die Mittel (19) zur Schätzung der Exzentrizität der Schwerpunktachse (B) eines Teils (12) umfasst, das auf dem Werktisch (11) angeordnet ist, im Verhältnis zu einer Drehachse (A) des Werktischs (11),

wobei der Teilehalter (10) **dadurch gekennzeichnet ist, dass** er weiter Folgendes umfasst:

- mindestens ein radiales Lager (15), das mit hydrostatischen radialen Schiebern ausgestattet ist, das ausgebildet ist für die geführte Kopplung des Werktischs (11) mit dem Fuß (13), um so eine Drehung um die Drehachse (A) des Werktischs (11) auf dem Fuß (13) zu ermöglichen, wobei die Drehachse (A) von der Achse des radialen Lagers (15) gebildet wird, und
- erste Fühler-Mittel (16), die funktionell mit mindestens einem ausgewählten radialen Schieber (17) des mindestens einen radialen Lagers (15) verbunden sind und die ausgebildet sind, um mindestens einen Funktionsparameter zu erfassen, wobei der mindestens eine Funktionsparameter ein Parameter ist, der den Betrieb des mindestens einen ausgewählten radialen Schiebers (17) anzeigt,
- wobei die zentrale Verarbeitungseinheit (18) funktionell mit den ersten Fühler-Mitteln (16) verbunden ist, um von ihnen Schätzungen des Funktionsparameters zu erhalten, und wobei die Schätzmittel (19) ausgebildet sind, um die Werte des Funktions-parameters, die von den Fühler-Mitteln (16) erfasst werden, zu verarbeiten, um den Wert der Exzentrizität (E) zu erhalten.

2. Der Teilehalter gemäß Anspruch 1, **dadurch gekennzeichnet, dass** das axiale Lager (14) axiale Schieber mit hydrostatischer Auflage umfasst, wobei der Teilehalter (10) weiter zweite Fühler-Mittel (20) umfasst, die funktionell mit mindestens einem ausgewählten axialen Schieber (21) des axialen Lagers (14) verbunden sind und die ausgebildet sind, um mindestens einen Betriebsparameter zu erfassen, wobei der mindestens eine Betriebsparameter ein Parameter ist, der die Arbeit des mindestens einen ausgewählten axialen Schiebers (21) anzeigt, wobei die zentrale Verarbeitungseinheit (18) weiter funktionell mit zweiten Fühler-Mitteln (20) verbunden ist, um von ihnen Schätzungen des Betriebsparameters zu empfangen, wobei die zentrale Verarbeitungseinheit (18) weiter Mittel (22) zur Bewertung der Höhe (q), auf dem Werktisch (11), des Schwerpunkts (G) eines Teils (12) umfasst, das auf der Auflagefläche (23) des Werktischs (11) angeordnet ist, wobei die Bewertungsmittel (22) ausgebildet sind, um die Werte der Parameter zu verarbeiten, die von den ersten und zweiten Fühler-Mitteln (16, 20) erfasst werden, um den Wert der Höhe (q) zu erhalten.

3. Der Teilehalter gemäß Anspruch 2, **dadurch gekennzeichnet, dass** die zweiten Fühler-Mittel (20) mindestens einen ersten Druckgeber (24) umfassen, der mit dem mindestens einen ausgewählten axialen Schieber (21) verbunden ist, um einen axialen Fließdruck ($P_1$) zu erfassen, welcher der Betriebsdruck des mindestens einen ausgewählten axialen Schiebers (21) ist, wobei der mindestens eine Betriebsparameter den axialen Fließdruck ($P_1$) umfasst.

4. Der Teilehalter gemäß Anspruch 3, **dadurch gekennzeichnet, dass** die ersten Fühler-Mittel (16) mindestens einen zweiten Druckgeber (25) umfassen, der mit dem mindestens einen ausgewählten radialen Schieber (17) verbunden ist, um einen radialen Fließdruck ($P_2$) zu erfassen, der der Betriebsdruck des mindestens einen ausgewählten radialen Schiebers (17) ist, wobei der mindestens eine Funktionsparameter den radialen Fließdruck ($P_2$) umfasst.

**5.** Der Teilehalter gemäß Anspruch 4, **dadurch gekennzeichnet, dass** die zentrale Verarbeitungseinheit (18) Lastberechnungsmittel umfasst, die ausgebildet sind, um den Wert der Last (m) zu berechnen, die auf den Werktisch (11) einwirkt, wobei der Wert der Last (m) gleich ist mit dem Produkt, das erhalten wird durch die Multiplikation eines Werts einer stationären axialen Druckschwankung ($dP_0$) mit einer ersten virtuellen Fläche ($A_{v1}$) multipliziert mit der Anzahl von Schiebern des axialen Lagers (14), in Formeln $m = dP_0 \cdot A_{v1} \cdot n_1$, wobei die stationäre axiale Druckschwankung ($dP_0$) gleich der Druckschwankung ist, die von dem ersten Druckgeber (24) bei einem Zustand erfasst wird, in dem der Werktisch (11) stationär und nicht beladen ist, und einem Zustand, in welchem der Werktisch (11) stationär und mit der Last beladen ist, und wobei die erste virtuelle Fläche ($A_{v1}$) die virtuelle Fläche des ausgewählten axialen Schiebers (21) ist.

**6.** Der Teilehalter gemäß Anspruch 5, **dadurch gekennzeichnet, dass** die Schätzmittel (19) Folgendes umfassen:

- Aufnahmemittel, die ausgebildet sind, um eine Operation zur Aufnahme (C) von Werten eines Drehwinkels (a), des Werts der Last (m) und von Werten des radialen Fließdrucks ($P_2$) als Funktion des Drehwinkels (a) auszuführen, wobei der Drehwinkel (a) der Drehwinkel des Werktischs (11) um die Drehachse (A) im Verhältnis zu einem vordefinierten Bezugspunkt (D) ist,

- erste Berechnungsmittel, die ausgebildet sind, um eine erste Operation (H) zur Berechnung einer maximalen radialen Fließdruckschwankung ($dP_{2max}$) und eines maximalen Druckwinkels ($X_{max}$) durchzuführen, wobei der Wert der maximalen radialen Fließdruckschwankung ($dP_{2max}$) gleich dem maximalen Wert ist, der von der Schwankung des radialen Fließdrucks ($P_2$) erreicht wird, der von dem zweiten Druckgeber (25) in einem Intervall von Werten des Drehwinkels (x) erfasst wird, die 360° abdecken und einer Drehung des Werktischs (11) entspricht, die mit einer ausgewählten konstanten Winkelgeschwindigkeit (v) durchgeführt wird, und wobei der maximale Druckwinkel ($x_{max}$) der Wert ist, der von dem Drehwinkel (x) eingenommen wird, bei dem die radiale Fließdruckschwankung ($dP_2$) gleich der maximalen radialen Fließdruckschwankung ($dP_{2max}$) ist,

- zweite Berechnungsmittel, die ausgebildet sind, um eine zweite Operation (L) zur Berechnung eines Werts eines Winkels der Last (y) und eines Werts der Kraft der Last (F) durchzuführen, wobei der Lastwinkel (y) gleich der Differenz ist, die gewonnen wird durch Subtraktion des Wertes des maximalen Druckwinkels ($x_{max}$), ausgedrückt in Grad, von 360°, in einer Formel $y° = 360° - X_{max}°$, wobei der Lastkraftwert (F) weiter gleich dem Produkt der Multiplikation der halben Anzahl von Schiebern ($n_2$) des radialen Lagers (15) mit einer zweiten virtuellen Fläche ($A_{v2}$) multipliziert mit der maximalen radialen Fließdruckschwankung ($dP_{2max}$) ist, in einer Formel $F = (n_2/2) \cdot A_{v2} \cdot P_{2max}$, wobei die zweite virtuelle Fläche ($A_{v2}$) die virtuelle Fläche des ausgewählten radialen Schiebers (17) ist,

- dritte Berechnungsmittel, die ausgebildet sind, um eine dritte Operation zur Berechnung des Exzentrizitätswerts (E) durchzuführen, die gleich dem Quotienten ist, der das Ergebnis der Division der Kraft der Last (F) durch das Produkt des Wertes der Last (m) multipliziert mit dem Quadratwert der ausgewählten Winkelgeschwindigkeit (v) ist, in einer Formel $E = F / (m \cdot v^2)$,

**7.** Der Teilehalter gemäß Anspruch 6, **dadurch gekennzeichnet, dass** die Aufnahmemittel weiter ausgebildet sind, um einen zusätzlichen Aufnahmevorgang (Q) von Werten des axialen Fließdrucks ($P_1$) in Abhängigkeit von dem Drehwinkel (x) durchzuführen, wobei die Bewertungsmittel (22) Folgendes umfassen:

- vierte Berechnungsmittel, die ausgebildet sind, um eine vierte Operation (R) zur Berechnung eines Werts maximaler Fließdruckschwankung ($dP_{1max}$) durchzuführen, gleich dem maximalen Wert, der erreicht wird von der Schwankung des axialen Fließdrucks ($P_1$), erfasst von dem ersten Druckgeber (24) in einem Bereich von Werten des Drehwinkels (x), der 360° abdeckt und einer Drehung des Werktischs (11) entspricht, die mit der ausgewählten konstanten Winkelgeschwindigkeit (v) durchgeführt wird,

- fünfte Berechnungsmittel, die ausgebildet sind, um eine fünfte Operation (T) zur Berechnung eines Werts eines Kippmoments ($M_F$) durchzuführen, das gleich dem Produkt ist, das das Ergebnis der Multiplikation der ersten virtuellen Fläche ($A_{v1}$) multipliziert mit der maximalen axialen Fließdruckschwankung ($dP_{1max}$) geteilt durch einen Verteilungskoeffizienten (s) ist, in einer Formel $M_F = A_{v1} \cdot dP_{1max}/s$, wobei der Verteilungskoeffizient (s) gleich dem Kehrwert des Produkts ist, das erhalten wird, aus der Multiplikation des Radius der Schieber (r) multipliziert mit der Summe, die gewonnen wird durch Addition der Quadratwerte der Kosinuswerte der Winkel der Mittelpunkte der Schieber ($a_1$), geschätzt mit Bezug auf einen Referenzradius, in einer Formel

$$s = \frac{1}{\left(r \cdot \sum_{i=1}^{i=n} (\cos^2 a_i)\right)},$$

- sechste Berechnungsmittel, die ausgebildet sind, um eine sechste Operation (U) zur Berechnung der Höhe (q) gleich der Differenz zwischen einer Höhe des Schwerpunkts ($h_g$) und einer Höhe des Werktischs ($h_t$) zu berechnen, in einer Formel q = hg-ht, wobei die Höhe des Schwerpunkts ($h_g$) gleich dem Quotienten ist, der gewonnen wird aus der Division des Werts des Kippmoments ($M_F$) durch die Kraft der Last (F), in einer Formel $h_g = M_F/F$, wobei die Höhe des Werktischs ($h_1$) gleich dem Abstand zwischen der Mitte des radialen Lagers (15) und der Auflagefläche (23) des Werktischs (11) ist.

8. Der Teilehalter gemäß Anspruch 7, **dadurch gekennzeichnet, dass** die Aufnahmemittel und die Berechnungsmittel in einen elektronischen Rechner integriert sind.

9. Der Teilehalter gemäß Anspruch 8, **dadurch gekennzeichnet, dass** die zentrale Verarbeitungseinheit (18) Mittel zur Bereitstellung einer Schnittstelle zum Bediener umfasst, die ausgebildet sind, um mindestens

   - den Wert des maximalen Druckwinkels ($X_{max}$) im Verhältnis zu dem Bezugspunkt (D),
   - den Wert der Exzentrizität (E), und
   - den Wert der Höhe (q)
   zu haben.

10. Der Teilehalter gemäß Anspruch 9, **dadurch gekennzeichnet, dass** die zentrale Verarbeitungseinheit (18) siebte Mittel zur Berechnung einer Gegengewichtsmasse und einer Position der Gegengewichtsmasse auf dem Werktisch (11) umfasst, zur Ausbalancierung des Teils (12) auf dem Werktisch (11), wobei die Ausbalancierung einer Anordnung entspricht, in welcher die Exzentrizität (E) einen Wert von Null hat.

11. Der Teilehalter gemäß einem der obigen Ansprüche, **dadurch gekennzeichnet, dass** mindestens eines selektiv von dem mindestens einen axialen Lager und dem mindestens einen radialen Lager Folgendes umfasst:

   - ein Lager mit rollenden Elementen, und
   - hydrostatische Schieber, die zwischen dem Lager mit rollenden Elementen und mindestens einem Bestandteil des Teilehalters, gewählt aus dem Werktisch und dem Fuß, angeordnet sind.

**Revendications**

1. Porte-pièce (10) en particulier pour des pièces ayant une grande masse à usiner dans des machinesoutils telles que des tours verticaux et similaires, comprenant

   - une table porte-pièce (11) permettant de supporter une pièce (12) à usiner,
   - une semelle (13) permettant de supporter ladite table porte-pièce (11),
   - au moins un palier axial (14), qui est adapté pour supporter ladite table porte-pièce (11) sur ladite semelle (13) ; et
   - une unité de traitement centrale (18) comprenant des moyens (19) permettant d'estimer l'excentricité de l'axe (B) de centre de gravité d'une pièce (12) agencée sur ladite table porte-pièce (11) par rapport à un axe de rotation (A) de ladite table porte-pièce (11),
   le porte-pièce (10) étant **caractérisé en ce qu'**il comprend en outre

   - au moins un palier radial (15), pourvu de coulisseaux radiaux hydrostatiques, qui est adapté pour le couplage guidé de ladite table porte-pièce (11) avec ladite semelle (13) de façon à permettre une rotation autour dudit axe de rotation (A) de ladite table porte-pièce (11) sur ladite semelle (13), ledit axe de rotation (A) étant formé par l'axe dudit palier radial (15), et
   - des premiers moyens de détection (16), qui sont fonctionnellement connectés à au moins un coulisseau radial choisi (17) dudit au moins un palier radial (15) et sont adaptés pour détecter au moins un paramètre fonctionnel, ledit au moins un paramètre fonctionnel étant un paramètre qui indique le fonctionnement dudit au moins un coulisseau radial choisi (17),
   - ladite unité de traitement centrale (18) étant fonctionnellement connectée auxdits premiers moyens de détection (16) afin de recevoir d'eux des estimations dudit paramètre fonctionnel, et lesdits moyens d'estimation (19) étant adaptés pour traiter les valeurs dudit paramètre fonctionnel détecté par lesdits moyens de détection (16), de façon à obtenir la valeur de ladite excentricité (E).

2. Porte-pièce selon la revendication 1, **caractérisé en ce que** ledit palier axial (14) comprend des coulisseaux axiaux avec support hydrostatique, ledit porte-pièce (10) comprenant en outre des deuxièmes moyens de détection (20), qui sont fonctionnellement connectés à au moins un coulisseau axial choisi (21) dudit palier axial (14) et sont adaptés pour détecter au moins un paramètre de fonctionnement, ledit au moins un paramètre de fonctionnement étant un paramètre qui indique le fonctionnement dudit au moins un coulisseau axial choisi (21), ladite unité de traitement centrale (18) étant en outre fonctionnellement connectée à des deuxièmes moyens de détection (20) afin de recevoir d'eux des estimations dudit paramètre de fonctionnement, ladite unité de traitement centrale (18) comprenant en outre des moyens (22) permettant d'estimer la hauteur (q), sur ladite table porte-pièce (11), du centre de gravité (G) d'une pièce (12) agencée sur la surface de repos (23) de ladite table porte-pièce (11), lesdits moyens d'estimation (22) étant adaptés pour traiter lesdites valeurs desdits paramètres détectés par lesdits premiers et deuxièmes moyens de détection (16, 20), de façon obtenir la valeur de ladite hauteur (q).

3. Porte-pièce selon la revendication 2, **caractérisé en ce que** lesdits deuxièmes moyens de détection (20) comprennent au moins un premier transducteur de pression (24), qui est connecté audit au moins un coulisseau axial choisi (21), afin de détecter une pression d'écoulement axial ($P_1$), qui est la pression de service dudit au moins un coulisseau axial choisi (21), ledit au moins un paramètre de fonctionnement comprenant ladite pression d'écoulement axial ($P_1$).

4. Porte-pièce selon la revendication 3, **caractérisé en ce que** lesdits premiers moyens de détection (16) comprennent au moins un deuxième transducteur de pression (25), qui est connecté audit au moins un coulisseau axial choisi (17), afin de détecter une pression d'écoulement radial ($P_2$), qui est la pression de service dudit au moins un coulisseau radial choisi (17), ledit au moins un paramètre fonctionnel comprenant ladite pression d'écoulement radial ($P_2$).

5. Porte-pièce selon la revendication 4, **caractérisé en ce que** ladite unité de traitement centrale (18) comprend des moyens de calcul de charge, qui sont adaptés pour calculer la valeur de la charge (m) qui repose sur ladite table porte-pièce (11), ladite valeur de la charge (m) étant égale au produit obtenu en multipliant une valeur d'une variation de pression axiale stationnaire ($dP_0$) multipliée par une première aire virtuelle ($A_{v1}$) multipliée par le nombre de coulisseaux dudit palier axial (14), dans la formule $m = dP_0 \cdot A_{v1} \cdot n_1$, ladite variation de pression axiale stationnaire ($dP_0$) étant égale à la variation de pression détectée par ledit premier transducteur de pression (24) entre un état dans lequel ladite table porte-pièce (11) est stationnaire et non chargée et un état dans lequel ladite table porte-pièce (11) est stationnaire et chargée avec ladite charge, et ladite première aire virtuelle ($A_{v1}$) étant l'aire virtuelle dudit coulisseau axial choisi (21).

6. Porte-pièce selon la revendication 5, **caractérisé en ce que** lesdits moyens d'estimation (19) comprennent

- des moyens d'enregistrement, qui sont adaptés pour réaliser une opération permettant d'enregistrer (C) des valeurs d'un angle de rotation (a), de ladite valeur de la charge (m) et de valeurs de ladite pression d'écoulement radial ($P_2$) en fonction dudit angle de rotation (a), ledit angle de rotation (a) étant l'angle de rotation de ladite table porte-pièce (11) autour dudit axe de rotation (A) par rapport à une référence prédéfinie (D),

- des premiers moyens de calcul, qui sont adaptés pour réaliser une première opération (H) visant à calculer une variation de pression d'écoulement radial maximale ($dP_{2max}$) et un angle de pression maximal ($X_{max}$), ladite valeur de variation de pression d'écoulement radial maximale ($dP_{2max}$) étant égale à la valeur maximale adoptée par la variation de ladite pression d'écoulement radial ($P_2$) détectée par ledit deuxième transducteur de pression (25) dans un intervalle de valeurs dudit angle de rotation (X) qui couvre 360° et correspond à une rotation de ladite table porte-pièce (11) réalisée à une vitesse angulaire constante choisie (v), et ledit angle de pression maximal ($X_{max}$) étant la valeur adoptée par ledit angle de rotation (X) pour lequel ladite variation de pression d'écoulement radial ($dP_2$) est égale à ladite variation de pression d'écoulement radial maximale ($dP_{2max}$),

- des deuxièmes moyens de calcul, qui sont adaptés pour réaliser une deuxième opération (L) visant à calculer une valeur d'un angle de la charge (y) et une valeur de la force de la charge (F), ledit angle de charge (y) étant égal à la différence obtenue en soustrayant de 360° la valeur dudit angle de pression maximal ($X_{max}$) exprimée en degrés, dans la formule $y° = 360° - X_{max}°$, ladite valeur de force de charge (F) étant en outre égale au produit de la multiplication de la moitié du nombre de coulisseaux ($n_2$) dudit palier radial (15) multiplié par une deuxième aire virtuelle ($A_{v2}$) multipliée par ladite variation de pression d'écoulement radial maximale ($dP_{2max}$), dans la formule $F = (n_2/2) \cdot A_{v2} \cdot dP_{2max}$, ladite deuxième aire virtuelle ($A_{v2}$) étant l'aire virtuelle dudit coulisseau radial choisi (17),

- des troisièmes moyens de calcul, qui sont adaptés pour réaliser une troisième opération visant à calculer ladite valeur d'excentricité (E) égale au rapport qui est le résultat de la division de ladite force de la charge (F) divisée par le produit de ladite valeur de la charge (m) multipliée par le carré de la valeur de ladite vitesse angulaire choisie (v), dans la formule $E = F/$

$(m \cdot v^2)$.

**7.** Porte-pièce selon la revendication 6, **caractérisé en ce que** lesdits moyens d'enregistrement sont en outre adaptés pour réaliser une opération d'enregistrement auxiliaire (Q) de valeurs de ladite pression d'écoulement axial ($P_1$) en fonction dudit angle de rotation (X), lesdits moyens d'estimation (22) comprenant

- des quatrièmes moyens de calcul, qui sont adaptés pour réaliser une quatrième opération (R) visant à calculer une valeur de variation de pression d'écoulement axial maximale ($dP_{1max}$) égale à la valeur maximale adoptée par la variation de ladite pression d'écoulement axial ($P_1$) détectée par ledit premier transducteur de pression (24) dans une plage de valeurs dudit angle de rotation (X) qui couvre 360° et correspond à une rotation de ladite table porte-pièce (11) réalisée à ladite vitesse angulaire constante choisie (v),

- des cinquièmes moyens de calcul, qui sont adaptés pour réaliser une cinquième opération (T) visant à calculer une valeur de moment de basculement ($M_F$) égale au produit qui est le résultat de la multiplication de ladite première aire virtuelle ($A_{v1}$) multipliée par ladite variation de pression d'écoulement axial maximae ($dP_{1max}$) divisée par un coefficient de distribution (S), dans la formule $M_F = A_{v1} \cdot dP_{1max}/S$, ledit ou lesdits coefficient(s) de distribution étant égal/égaux à l'inverse du produit obtenu par la multiplication du rayon des coulisseaux (r) multiplié par la somme obtenue en ajoutant les carrés des cosinus des angles des centres des coulisseaux ($a_1$), estimés par rapport à un rayon de référence, dans la formule

$$s = \frac{1}{\left( r \cdot \sum_{i=1}^{i=q} (\cos^2 a_i) \right)},$$

- des sixièmes moyens de calcul, qui sont adaptés pour réaliser une sixième opération (U) visant à calculer ladite hauteur (q) égale à la différence entre une hauteur du centre de gravité ($h_g$) et une hauteur de la table porte-pièce ($h_t$), dans la formule $q = h_g - h_t$, ladite hauteur du centre de gravité ($h_g$) étant égale au rapport obtenu par la division de ladite valeur du moment de basculement ($M_F$) divisée par ladite force de la charge (F), dans la formule $h_g = M_F/F$, et ladite hauteur de la table porte-pièce ($h_t$) étant égale à la distance entre le centre dudit palier radial (15) et ladite surface de repos (23) de ladite table porte-pièce (11).

**8.** Porte-pièce selon la revendication 7, **caractérisé en ce que** lesdits moyens d'enregistrement et lesdits moyens de calcul sont intégrés dans un ordinateur électronique.

**9.** Porte-pièce selon la revendication 8, **caractérisé en ce que** ladite unité de traitement centrale (18) comprend des moyens d'interfaçage avec l'opérateur, qui sont adaptés pour avoir au moins

- la valeur dudit angle de pression maximal ($X_{max}$) par rapport à ladite référence (D),
- la valeur de ladite excentricité (E), et
- la valeur de ladite hauteur (q).

**10.** Porte-pièce selon la revendication 9, **caractérisé en ce que** ladite unité de traitement centrale (18) comprend des septièmes moyens permettant de calculer une masse de contrepoids et une position de ladite masse de contrepoids sur ladite table porte-pièce (11), pour l'équilibrage de la pièce (12) sur ladite table porte-pièce (11), ledit équilibrage correspondant à une configuration dans laquelle ladite excentricité (E) a une valeur nulle.

**11.** Porte-pièce selon l'une des revendications précédentes, **caractérisé en ce qu'**au moins un élément choisi entre ledit au moins un palier axial et ledit au moins un palier radial comprend

- un palier avec des éléments de roulement, et
- des coulisseaux hydrostatiques, qui sont interposés entre ledit palier avec des éléments de roulement et au moins un composant dudit porte-pièce choisi entre ladite table porte-pièce et ladite semelle.

fig. 1

fig. 2

EP 2 485 866 B1

$G$

$H$

$DP_2, X, m$

$X_{max}$

$dP_{2\,max}$

$L$

$$y = 360° - X_{max}$$

$$F = \frac{n \cdot A_{v2} \cdot dP_{2\,max}}{2}$$

$F$

$N$

$$E = \frac{F}{m - V^2}$$

$E$

fig. 3

$$P_1(X)$$

$$R$$

$$Q$$

$$dP_{1\,max}$$

$$T$$

$$X_{max}$$

$$M_F = \frac{A_{v1} \cdot dP_{1\,max}}{S}$$

$$S = \frac{1}{r \cdot \sum_{i=1}^{i=n} \cos^2(a_i)}$$

$$q = h_g - h_t$$

$$U$$

$$F$$

$$h_g = \frac{M_F}{F}$$

$$q$$

*fig. 4*

fig. 5

fig. 6

18

**EP 2 485 866 B1**

**REFERENCES CITED IN THE DESCRIPTION**

**Patent documents cited in the description**

- EP 2607569 A1
- GB 2160451 A
- US 3776065 A